(19) Europäisches Patentamt

European Patent Office

Office européen des brevets

(11) **EP 1 487 127 B1**

(12) **EUROPEAN PATENT SPECIFICATION**

(45) Date of publication and mention of the grant of the patent:
**12.09.2007 Bulletin 2007/37**

(51) Int Cl.:
***H04B 1/707*** (2006.01)

(21) Application number: **03388046.9**

(22) Date of filing: **13.06.2003**

(54) **Method and apparatus for positioning a multipath search window**

Verfahren und Vorrichtung zur Einstellung eines Mehrwegsuchfensters

Méthode et système pour le placement d'une fenêtre de recherche multitrajet

(84) Designated Contracting States:
**AT BE BG CH CY CZ DE DK EE ES FI FR GB GR HU IE IT LI LU MC NL PT RO SE SI SK TR**

(43) Date of publication of application:
**15.12.2004 Bulletin 2004/51**

(73) Proprietor: **TELEFONAKTIEBOLAGET LM ERICSSON (publ)**
**164 83 Stockholm (SE)**

(72) Inventor: **Jonsson, Elias**
**211 29 Malmö (SE)**

(74) Representative: **Boesen, Johnny Peder et al**
**Zacco Denmark A/S**
**Hans Bekkevolds Allé 7**
**2900 Hellerup (DK)**

(56) References cited:
**EP-A- 0 942 539**      **EP-A- 1 276 248**
**GB-A- 2 368 238**      **US-A1- 2001 046 221**
**US-B1- 6 370 397**

**Description**

Technical Field of the Invention

The invention relates to a method of detecting multipath components in a time-varying fading radio channel in a digital wireless communications system in which individual multipath components of a signal transmitted through said channel are received with individual delays within a range of possible delay values. The method comprises the steps of calculating repetitively a delay profile indicating a magnitude for each of a number of individual delay values; searching repetitively for new multipath components in a search window constituting a subset of said range of possible delay values; and positioning said search window based on at least one previously calculated delay profile. The invention further relates to a receiver having means for detecting multipath components in a time-varying fading radio channel, and a corresponding computer program and a computer readable medium.

Description of Related Art

In wireless communications systems the physical channel between a transmitter and a receiver is typically formed by a radio link. As an example, the transmitter could be a base station, and the receiver could be a mobile station, or vice versa. In most cases the transmit antenna is not narrowly focused towards the receiver. This means that the transmitted signals may propagate over multiple paths. In addition to a possible direct path from the transmitter to the receiver, many other propagation paths caused by reflections from objects in the surroundings exist. Thus, the receiver may receive multiple instances of the same signal at different times, i.e. with different delays, because different portions of the signal are reflected from various objects, such as buildings, moving vehicles or landscape details.

These different portions of the signal are a cause of interference in the receiver. Depending on the time resolution of the transmission system and the instantaneous phase relationship, portions with similar propagation distances combine at the receiver and form a distinct multipath component. The effect of the combining depends on the instantaneous relationship of the carrier wavelength and distance differences, and it may thus for a given multipath component be either enhancing or destructive. In case of destructive interference, the combining leads to significant decrease of the magnitude, or fading, of the path gain for that path.

This interference is treated differently in different transmission systems. Many transmission systems try to reduce the effect of multipath propagation and fading by using receivers that combine the data symbol energy from all multi-path components. In Code Division Multiple Access (CDMA) and Wideband Code Division Multiple Access (WCDMA) systems the energy of the different received portions of the signal may be utilized in the receiver by using a so-called RAKE receiver.

In these systems spreading and despreading are used. Data are transmitted from the transmitter side using a spread spectrum modulation technique wherein the data are scattered across a wide range of frequencies. Each channel is assigned a unique spreading code that is used to spread the data across the frequency range. The spreading code is a pseudo-random noise (PN) code and is composed of e.g. a binary sequence of 1's and 0's, called "chips", that are distributed in a pseudo-random manner and have noise-like properties. The number of chips used to spread one data bit, i.e. chips/bit, may vary, and it depends, at least in part, on the data rate of the channel and the chip rate of the system.

In the receiver the received signal must be despread and demodulated with the same spreading code using the same chip rate to recover the transmitted data. Furthermore, the timing of the demodulation must be synchronized, i.e. the despreading code must be applied to the received signal at the correct instant in time, which can be difficult due to the multipath effects mentioned above. The performance of a CDMA receiver is improved if the signal energy carried by many multipath components is utilized. This is achieved by using a RAKE receiver, where each multipath component is assigned a despreader whose reference copy of the spreading code is delayed equally to the path delay of the corresponding multipath component. The outputs of the despreaders, i.e. the fingers of the RAKE receiver, are then coherently combined to produce a symbol estimate.

Thus the RAKE receiver requires knowledge of the multipath delays and the values of the channel impulse response for all paths. To achieve the best possible signal-to-noise ratio (SNR) at the output of the RAKE combiner, the signal energy from as many physical paths as possible should be collected. In addition, tracking as many different physical paths as possible (higher utilized diversity) significantly increases the robustness of reception, since this reduces the probability of a simultaneous deep fade of all paths, a phenomenon leading to serious and sometimes catastrophic degradation of the block error rate (BLER).

The structure of the propagation channel, i.e. the absolute and relative delays of the individual multipath components, does not remain constant over time. Due to relative movement of the transmitter, the receiver and the objects in their vicinity, the delays of existing paths change, old paths disappear and new paths appear. In addition, the frequency offset between the transmitter and receiver circuits gives rise to a slow clock drift, which manifests itself as a gradual movement of the whole delay profile along the time axis. To ensure proper operation of the RAKE receiver, the changing delays of all known multipath components should be tracked, and new paths should be discovered quickly after they appear.

The impulse response of a channel may be evaluated by transmitting a known pilot signal which is then despread and demodulated in the receiver. In e.g. a WCDMA network the Common Pilot Channel (CPICH) may be used. In the receiver the received signal is correlated with the scrambling code for the cell and the CPICH channelization code, i.e. the CPICH symbols are despread and then accumulated. This is done for a given number of time delays. The strength of the accumulated signal for a given delay reflects the power contained at this time-delay. If it is judged to be higher than a specified noise floor, we say that it represents a multi-path.

An approach to delay estimation in a RAKE receiver implementation could involve evaluation of the impulse response of the channel over the whole range of possible delays of the channel. The resulting delay profile, which may be a complex delay profile (CDP) or a power delay profile (PDP), may then be subjected to peak detection, and the peak locations are reported to the RAKE receiver as the delay estimates. However, the processing and power consumption expense of frequently executing this full path searching routine is usually prohibitive. Further, measurements of the signal quality from neighbouring cells should also be periodically reported, with the purpose of choosing the cell or set of cells that best can serve the user equipment. In the specification it is said that the receiver should be able to monitor up to eight cells per frequency, and up to three frequencies should be monitored. Thus, a total of up to twenty-four cells need to be monitored.

Therefore, typical implementations may use path searchers with observation windows shorter than the full search area. In addition, the path searcher resolution may be reduced and additional densely-sampled windows of despreaders may be used that produce higher-resolution estimates of certain areas of the delay profile. In any case, in a practical delay estimation system the path searcher stage is used periodically to re-scan the delay range with the purpose of detecting new paths.

When a general delay estimation algorithm is used, which is able to extract the path positions and find their delays with sufficient accuracy once they are discovered by the path searcher, it is a main task to position the path searcher window so that new paths will be included in the window. Since new paths will, with high probability, appear in the vicinity of the currently known paths in terms of their delays, although it is not known exactly where, the prevalent criterion of placing the path searcher window is usually to cover the currently known paths.

A current power delay profile may comprise a set of power values for a number of delay values. This set may represent the set of currently tracked paths, in which case the delay values will usually not be contiguous. It may also represent a contiguous region over which the path search is conducted. Typically, a path searcher correlates over a consecutive number of time delays, spaced at quarter, half, or chip distance. Spacing the delays equidistantly lends to a less complex hardware design. Other ways of representing the power delay profile are also possible.

The task is to determine a suitable position for the path searcher window. A typically used method for determining a suitable path searcher window position for the next path search activation is based on computing the center of gravity (COG), also known as the mean excess delay, of the presently known power delay profile estimate. Given the center of gravity estimate, the path searcher window is placed so that most of the channel power would be covered by the window. Typically, the center of gravity estimate is used as the center position of the path searcher window, but the window may also be positioned asymmetrically around the center of gravity estimate. Because of the space loss, a typical shape of the power delay profile exhibits exponential decay, i.e. the energy is concentrated towards the beginning of the region of interest. For a reasonable coverage the window could thus be placed e.g. 1/3 ahead of and 2/3 behind the center of gravity value. Instead of the center of gravity method, the same idea can be applied to some other statistical measure related to the distribution of the power delay profile.

In the case of a compact true power delay profile and a high signal-to-noise ratio, the center of gravity gives a consistent and reliable estimate of the true energy concentration in the channel. However, when the energy in the channel is distributed over a wide delay spread, when the signal-to-noise ratio of the power delay profile is poor, and/or when the power delay profile used to compute the center of gravity is significantly time-varying due to fading, the center of gravity result tends to exhibit different problems.

First, the noise-induced component of the power delay profile values will cause a bias term which shifts the center of gravity result towards the average (non-power weighted) delay of all the entries of the power delay profile. The size of the bias term depends on how far from each other the true center of gravity and the "average delay" are separated, and on the signal-to-noise ratio. In many practical cases, the bias term may be large enough to shift the path searcher window away from significant portions of the true power delay profile. To counteract the noise-induced bias effect, the power delay profile values may be thresholded, which will remove a certain fraction of the noise-only samples and reduce the bias. However, efficient noise removal assumes the use of a rather high threshold, which in turn may remove the channel components from the power delay profile as well, and thus distort the power delay profile. The noise effect may also be reduced by noise subtraction, where the average noise power in the power delay profile is estimated, and instead of the original power delay profile values, values reduced by the average noise power are used in the center of gravity computation. In this way the bias is reduced, but since the noise floor cannot be estimated exactly, it cannot be removed completely, and a residual bias effect remains.

Second, if the physical propagation channel has a long delay spread, compared to the length of the path searcher window, the window must be positioned precisely in order to include all clusters of energy in the power delay profile. Any temporary fluctuation in the power delay profile seen by the center of gravity algorithm, e.g. due to fading, may offset the computed center of gravity value, and the window will be placed so that some of the true paths will be located outside the window. Thus the method might fail to catch any multipath delays that might appear or exist outside the path searcher window. As an example, two paths may be located within 4 chips of each other, and a third path is located 77 chips from the second one. The path searcher window may be on chip resolution, and the length of the path-searcher window may be 80 chips. If the cell-searcher (this is the initial search that delivers only one path and is only done once) finds the third path, and we then update the window position by centring the new window on the center of gravity of the power delay profile, we would fail to find the first two paths and thus loose two thirds of the energy transmitted by the base-station. In subsequent center of gravity computations only the remaining paths are used, and the window shifts away from the lost (but physically still present) paths. This leads to increased interference levels, reduced signal-to-interference ratio and reduced diversity, and in some cases it can cause loss of synchronization with the transmitter side.

Other proposals for updating the path-searcher window (instead of the center of gravity method) require more complex hardware implementations in that non-consecutive delays or a combination of small disjoint sets of consecutive delays are used to compute the power delay profile. Complex algorithms are then used to adjust the set of delays to capture all multi-path delays. These proposals using non-consecutive delays to compute the power delay profile will require complex hardware support and considerably memory consumption to keep all twenty-four cells updated. The memory consumption is a result of bookkeeping large portions of the power delay profile for each cell. One example of a method using a combination of small disjoint sub-windows is known from EP 1 126 627 in which a search is conducted in one subwindow at a time, and when all sub-windows are searched the results are combined.

It is also known to use a widened search range when no active path is detected within the original search window, e.g. because the received signal becomes too weak or is lost. Thus EP 1 257 067 shows a searcher in which the search range is successively extended when no active path is detected. The search range may be extended until it covers the whole maximum delay range. If and when paths of sufficient quality are found, the normal size search window may be used again. However, this solution does not solve the problem mentioned above, because paths of sufficient quality can actually be detected, and therefore the search range would not be extended. In the situation described above, the normal search window is actually wide enough, but the known methods of positioning the search window tend to position the window so that some important paths are not covered.

Also US 2001/0046221 shows the use of an extended window in a searcher. In a multiple window mode two windows are allocated adjacent in time for detection of power peaks by the searcher, and the search is performed in the combined window constituted by the two adjacent windows, so that computational resources corresponding to the wider window are still needed in this mode. In a different mode, a single window mode, the two windows are used for separate radio links.

US 6 370 397 shows a search window delay tracking procedure, in which a mean or average delay is calculated for the estimated channel impulse response, and the center of the search window is aligned with the calculated mean delay. Filtration of a search window delay adjustment signal is used to minimize the influence of noise and interference.

A similar search window delay tracking procedure is known from EP 1 276 248. In this procedure a center of gravity of the delay profile is used to more accurately position the search window.

Therefore, it is an object of the invention to provide a method of detecting multipath components that is able to detect good quality multipath components located or appearing outside the path search window that is used for reporting paths to other parts of the receiver. The invention shall provide a low complexity hardware implementation with a low memory solution for bookkeeping the signal quality from each cell.

<u>Summary</u>

According to the invention the object is achieved in that the positioning of said search window is at least intermittently based on a delay profile calculated for a range of delay values that is wider than said search window.

By basing the position of the search window on a delay profile calculated for a wider window it is ensured that also multipath components outside the path search window are detected. Since the wider window is only used for positioning the normal search window, paths outside the normal search window need not be stored and reported to the delay estimator, and therefore computational resources are saved compared to just using a wider search window. In subsequent searches the normal search window will be moved to cover such paths, and thus an optimal position of the search window is ensured.

The method further comprises the step of generating the wider range of delay values by combining a previous search window and at least one additional window comprising delay values adjacent to the previous search window. The wider range of delay values may be generated by combining the previous search window with two additional windows having the same size as the previous search window and being arranged contiguous to each other symmetrically around the center of the previous search window.

In one embodiment the search window is positioned with the calculated center of gravity as its center.

The method further comprises the steps of calculating a center of gravity for each of said previous search window and the two additional windows; calculating a combined center of gravity by combining the center of gravity for said previous search window with the center of gravity for at least one of the two additional windows; and positioning the search window around said combined center of gravity.

When the method further comprises the step of alternating between searching a number of times in a search window positioned based on a delay profile calculated for a previous search window; and searching a number of times in a search window positioned based on a delay profile calculated for a range of delay values wider than said search window, further computational resources are saved because the wider window is only used intermittently.

When the method further comprises the steps of calculating a delay profile for the wider range of delay values a number of times; calculating a filtered delay profile from said number of calculated delay profiles; and using said filtered delay profile as the delay profile calculated for the wider range of delay values, it is ensured that very short noise spikes are not erroneously detected as paths, because they are filtered out.

In one embodiment the search window is positioned with the calculated center of gravity as its center.

The step of calculating a combined center of gravity may expediently comprise the step of calculating a relative center of gravity value for each of the two additional windows by subtracting the center of gravity for said previous search window from the center of gravity calculated for each of the two additional windows. Further, the step of calculating a combined center of gravity may comprise the steps of calculating said relative center of gravity values for the two additional windows a number of times; and calculating a filtered relative center of gravity value for each of the two additional windows from said number of calculated relative center of gravity values.

In one embodiment, the method may further comprise performing repetitively the steps of resetting said filtered relative center of gravity values; calculating said relative center of gravity values for the two additional windows a number of times; and updating for each pair of new relative center of gravity values said filtered relative center of gravity values by including the pair of new relative center of gravity values; and calculating said combined center of gravity by combining the center of gravity for said previous search window with at least one of said updated filtered relative center of gravity values.

It is noted that the features of the method described above and in the following may be implemented in software and carried out in a data processing system or other processing means caused by the execution of program code means, such as computer-executable instructions. The program code means may be loaded in a memory, such as a RAM, from a storage medium or from another computer via a computer network. For example, in some embodiments, the computer program means may be received embodied as a data signal. Alternatively, the described features may be implemented by hardwired circuitry instead of software or in combination with software.

As mentioned, the invention further relates to a receiver having means for detecting multipath components in a time-varying fading radio channel in a digital wireless communications system in which individual multipath components of a signal transmitted through said channel are received with individual delays within a range of possible delay values. The receiver is adapted to calculate repetitively a delay profile indicating a magnitude for each of a number of individual delay values; search repetitively for new multipath components in a search window constituting a subset of said range of possible delay values; and position said search window based on at least one previously calculated delay profile.

When the receiver is further adapted to base the positioning of said search window at least intermittently on a delay profile calculated for a range of delay values that is wider than said search window, a receiver is provided that is able to detect multipath components located or appearing outside the path search window that is used for reporting paths to other parts of the receiver. The receiver has a low complexity hardware implementation with a low memory solution for bookkeeping the signal quality from each cell.

The receiver is further adapted to generate said wider range of delay values by combining a previous search window and at least one additional window comprising delay values adjacent to the previous search window. The receiver may further be adapted to generate the wider range of delay values by combining the previous search window with two additional windows having the same size as the previous search window and being arranged contiguous to each other symmetrically around the center of the previous search window.

The receiver is further adapted to calculate a center of gravity for each of said previous search window and said two additional windows; calculate a combined center of gravity by combining the center of gravity for said previous search window with the center of gravity for at least one of said two additional windows; and position the search window around said combined center of gravity.

When the receiver is further adapted to alternate between searching a number of times in a search window positioned based on a delay profile calculated for a previous search window; and searching a number of times in a search window positioned based on a delay profile calculated for a range of delay values wider than the search window, further computational resources are saved because the wider window is only used intermittently.

When the receiver is further adapted to calculate a delay profile for the wider range of delay values a number of times; calculate a filtered delay profile from said number of calculated delay profiles; and use said filtered delay profile as the delay profile calculated for the wider range of delay values, it is ensured that very short noise spikes are not erroneously detected as paths, because they are filtered out.

In one embodiment the receiver is further adapted to position the search window with said calculated center of gravity as its center.

The receiver may further be adapted to calculate a relative center of gravity value for each of said two additional windows by subtracting the center of gravity for said previous search window from the center of gravity calculated for each of said two additional windows. Further, the receiver may be adapted to calculate said relative center of gravity values for the two additional windows a number of times; and calculate a filtered relative center of gravity value for each of the two additional windows from said number of calculated relative center of gravity values.

In one embodiment the receiver may further be adapted to reset said filtered relative center of gravity values; calculate said relative center of gravity values for the two additional windows a number of times; and update for each pair of new relative center of gravity values said filtered relative center of gravity values by including the pair of new relative center of gravity values; and calculate said combined center of gravity by combining the center of gravity for said previous search window with at least one of said updated filtered relative center of gravity values.

Further, the receiver may expediently be adapted for use in a Wideband Code Division Multiple Access system.

The invention also relates to a computer program and a computer readable medium with program code means for performing the method described above.

Brief Description of the Drawings

The invention will now be described more fully below with reference to the drawings, in which

figure 1 shows an example of multiple paths between a base station and a mobile station,

figure 2 shows a power delay profile for the paths illustrated in figure 1,

figure 3 illustrates the use of a path searcher in combination with a RAKE receiver,

figure 4 shows a sampled power delay profile corresponding to the profile shown in figure 2,

figure 5 shows a flow chart illustrating the steps of a part of a path searcher,

figure 6 illustrates a situation where the known center of gravity method fails to find all relevant paths,

figure 7 shows how an extended window is intermittently used in a path searcher,

figure 8 shows a flow chart illustrating the use of extended window shown in figure 7,

figure 9 shows different locations three windows that together form an extended window,

figure 10 shows a flow chart illustrating an embodiment using the combination of three windows as an extended window, and

figure 11 shows a flow chart illustrating a part of the flow chart of figure 10 in more detail.

Detailed Description of Embodiments

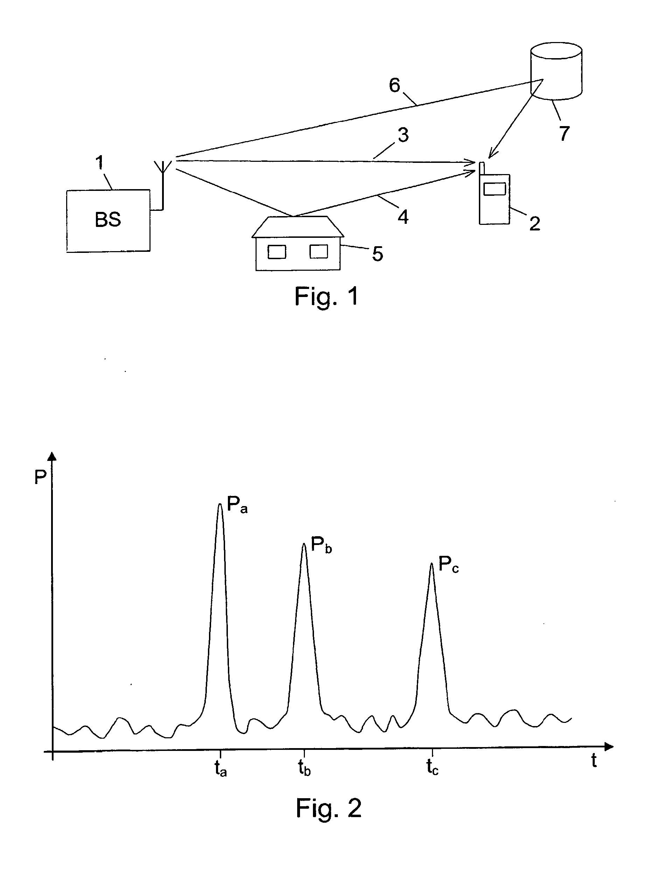

Figure 1 shows a situation in which a base station 1 and a mobile station 2 of a wireless communications system communicate with each other. As an example, a signal transmitted from the base station 1 is received by the mobile station 2. However, the transmitted signal travels along multiple paths from the base station to the mobile station. In this case there is a direct and unobstructed propagation path 3, but in addition to this direct path, reflections from objects in the surroundings cause a number of indirect paths to exist. Two such paths are shown in the figure. One indirect path 4 is reflected from a house 5, while another path 6 is caused by reflection from another building 7.

Since the part of a signal transmitted via one of the indirect paths 4 and 6 has to travel a longer distance to arrive at the mobile station 2, compared to the part of the signal travelling via the direct path 3, multiple instances of the same signal will be received by the mobile station 2 at different times, i.e. with different delays.

Thus, if a pilot signal is transmitted from the base station 1, the power P received at the mobile station 2 as a function of the time t may look as illustrated in figure 2, which shows an example of a power delay profile. The power delay profile shows all signals received at the mobile station, including noise and interference signals. However, only the peaks in the power delay profile correspond to the multipath components of the transmitted signal. Together these peaks form the impulse response of the channel. In figure 2 the peak $P_a$ received at the time $t_a$ corresponds to the direct path 3 in figure 1, while the peaks $P_b$ and $P_c$ received at the times $t_b$ and $t_c$, respectively, correspond to the indirect paths 4 and 6 in figure 1. Thus, as an example, it is seen that the delay of the path 6 (corresponding to the peak $P_c$) is larger than the delay of the path 3 (corresponding to the peak $P_a$).

The mobile station 2 and the base station 1 may be adapted for use in e.g. a Code Division Multiple Access (CDMA) system or a Wideband Code Division Multiple Access (WCDMA) system, and in that case the mobile station 2 may use a RAKE receiver, which is capable of identifying and tracking the various multipath signals for a given channel. In this way the energy or power of several multipath components can be utilized in the receiver. As mentioned above, this may be achieved by using a RAKE receiver, where each multi-path component is assigned a despreader whose reference copy of the spreading code is delayed equally to the path delay of the corresponding multipath component. The outputs of the despreaders, i.e. the fingers of the RAKE receiver, are then coherently combined to produce a symbol estimate. Thus the RAKE receiver requires knowledge of the multipath delays and the values of the channel impulse response for all paths. The signal energy from as many physical paths as possible should be collected.

Although reference is here made to a RAKE receiver in a mobile station, it should be noted that the algorithms described below may be used at any CDMA receiver, i.e. in a mobile station or a base station, and the transmission may be uplink or downlink.

Since the structure of the propagation channel does not remain constant over time, the delays of existing paths change, old paths disappear and new paths appear. The changing delays of all known multipath components should be tracked, and new paths should be discovered quickly after they appear. However, most of the time the delays of newly appeared paths are relatively similar to those of the old, known paths, and thus they may be detected by searching in the same neighbourhood.

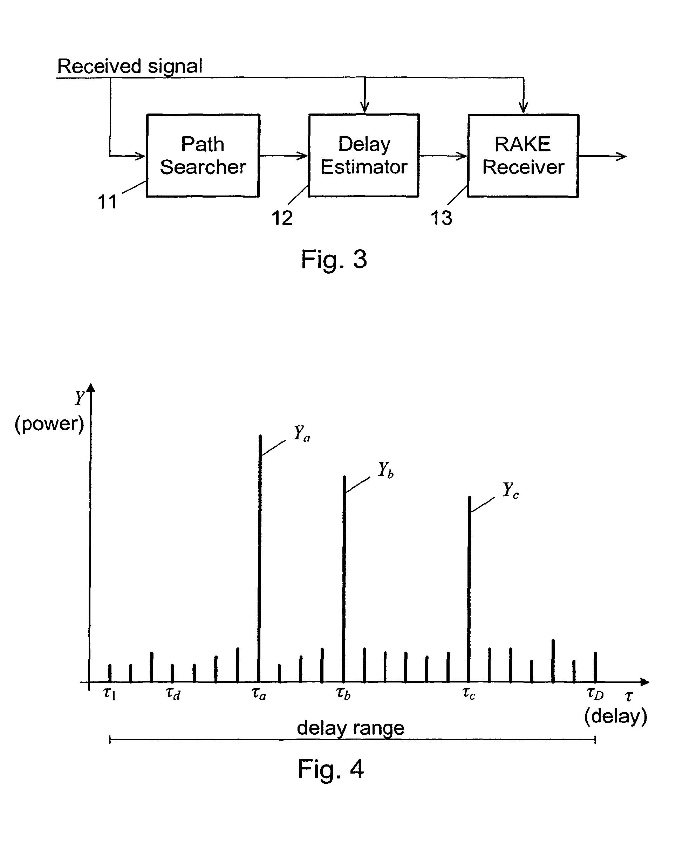

In order to estimate the path delays in the RAKE receiver, the impulse response of the channel could be evaluated over the whole range of possible delays in the channel, and the resulting delay profile could then be subjected to peak detection and the peak locations reported to the RAKE receiver as the delay estimates. However, the processing and power consumption of executing such a full path searching routine frequently is usually so high that it cannot be realized in a practical system. Therefore, infrequently activated limited-range path searchers are typically used for detecting new paths and, in some implementations, for re-detecting temporarily faded existing paths. This is illustrated in figure 3, in which a path searcher 11 is used in combination with a RAKE receiver 13.

The path searcher 11 is a device that periodically computes instantaneous impulse response estimates (complex or power) over a range of delays that only constitutes a fraction of the maximum delay spread allowed by the system. This reduced range of delays is also called a path search window. The complex or power values for a given delay value may be estimated e.g. by correlating the received data for pilot symbols with an appropriately delayed copy of the spreading sequence. Since the path searcher 11 is mainly used to detect only the existence of paths, its output resolution may be lower than that required by the RAKE receiver 13. The RAKE receiver 13 itself uses a general delay estimation algorithm 12, which is able to extract the path positions and find their delays with sufficient accuracy, once they are discovered by the path searcher 11. Thus an important task in the path searcher is to position the path searcher window so that new paths can be expected to be included in the window. As mentioned, new paths will with high probability appear in the vicinity of the currently known paths, and thus the path search window for a new search is normally placed so that it covers the currently known paths. This can be done in different ways. One method is the center of gravity method, but as mentioned this method suffers from a number of problems.

Typically, the delay profile of the received signal will not be available as a continuous curve as the one illustrated in figure 2. Instead, it will consist of a number of sample values. This is illustrated in figure 4, which shows a sampled power delay profile corresponding to the continuous delay profile shown in figure 2. For each delay value $\tau_d$, where $d = 1, ..., D$, the corresponding power value $Y_d$ is shown. In this case the available estimates of the power delay profile constitutes a contiguous sequence of equally spaced samples. The power values $Y_a$, $Y_b$ and $Y_c$ at the delay values $\tau_a$, $\tau_b$ and $\tau_c$ correspond to the peaks $P_a$, $P_b$ and $P_c$ shown in figure 2.

The function of the (known) path searcher will now be described in more detail. In a WCDMA network measurements of the signal quality from neighbouring cells are periodically reported, typically based on pilot signals from e.g. the Common Pilot Channel (CPICH). Three signal quality measurements are performed on the Common Pilot Channel. The Received Signal Strength Indicator (RSSI) is defined as the total received power, including signal and interference, as measured at the antenna connector; the Received Signal Code Power (RSCP) is the received power from the Common Pilot Channel; and $E_c/I_o$ is the ratio of the received energy per PN chip for the Common Pilot Channel to the total transmit power, i.e. $E_c/I_o = RSCP/RSSI$. Especially, $E_c/I_o$ and RSCP inform the network of the quality of a given cell. In practice, RSCP and RSSI are computed, which then give $E_c/I_o$.

A path searcher computes RSCP and RSSI. It correlates the received signal with the scrambling code for the cell and the CPICH channelization code, i.e. the CPICH symbols are despread and then accumulated. This is done for a given number of time delays. The strength of the accumulated signal for a given delay $\tau_d$ reflects the power $Y_d$ contained at this time delay. If it is judged to be higher than a specified noise floor, it is said to represent a multipath and its power contributes to the RSCP.

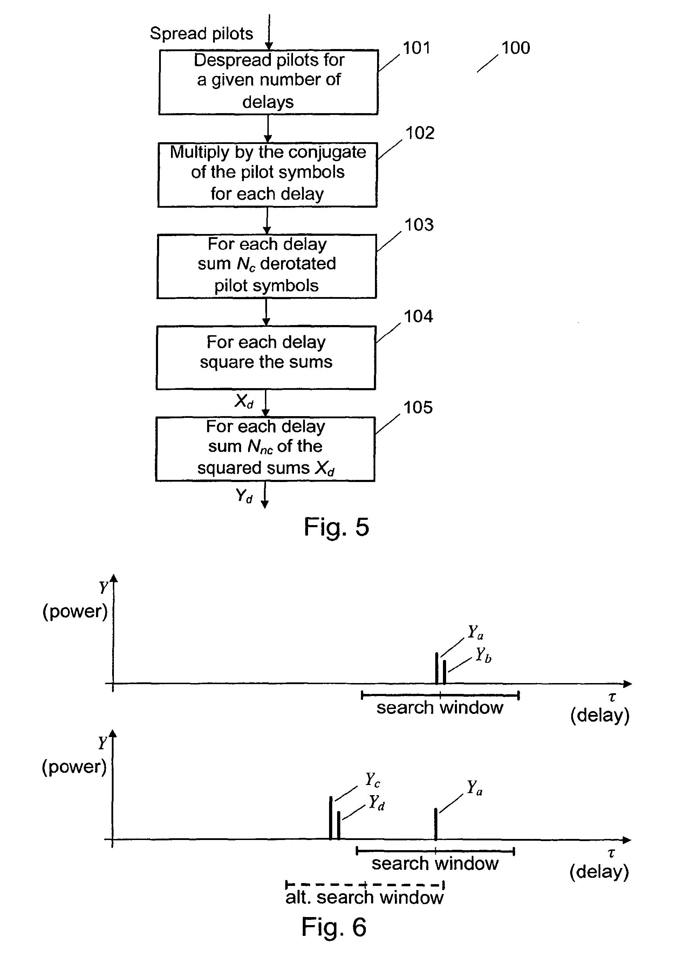

A general structure of a part of a path searcher is shown in the flow chart 100 in figure 5. In Block 101, we despread the pilots, usually the CPICH, for a given set of time delays. In Block 102, we multiply the received despread pilots by the known complex conjugate of the pilot symbols. This essentially gives an approximation of the radio channel for this time delay. In Block 103, we add a number $N_c$ of these de-rotated pilot symbols. This is called coherent summation and reduces the noise inherent with the de-rotated pilots/radio channel estimates. In Block 104, we square the output of Block 103 for each time delay resulting in the value $X_d$. Finally, in Block 105 a number $N_{nc}$ of the $X_d$ values are summed. The result is the output power value $Y_d$ for the delay with index $d$. This is called non-coherent summation and the purpose is again to combat noise. Coherent summation is more effective than non-coherent summation in suppressing noise, but also requires that the radio channel does not change during a coherent summation. Typically, the numbers $N_c$ and $N_{nc}$ can be selected so that $1 \leq N_c \leq 10$ and $1 \leq N_{nc} \leq 30$, with $N_c = 2$ and $N_{nc} = 20$ as recommended values, if measurements are made on the CPICH.

As mentioned, $Y_d$ is the output for delay with index $d$. We assume that there are $D$ delays $d = 1,..., D,$ and that the corresponding delays are spread equidistantly. Typically, $80 \leq D \leq 300$, with $D = 100$ as a recommended value. A subset $\Omega_d$ of the power values $Y_d$ can be defined as the subset of the index set $\{1...D\}$ selecting the $N_d$ smallest $Y_d$ values. Typically, $N_d = D-20$. Each of the remaining scaled values $Y_d / N_{nc}N_c sf$ is denoted as $S_d$, where $sf$ is the spreading factor ($sf = 256$ for the CPICH).

It can then be shown that when using chip resolution between the time delays, RSSI equals

$$RSSI = Z = \frac{1}{N_d N_{nc} N_c sf} \sum_{d \in \Omega_d} Y_d \; .$$

Let $\Omega_d^{'}$ be a subset of the remainder set $\Omega_d^r = \{d; d \in \{1...D\} \text{ and } d \notin \Omega_d\}$. We can choose $\Omega_d^{'}$ to consist of the indexes $l$ fulfilling

$$\alpha_1 \max_{d \in \Omega_d^{'}}(Y_d - Z) \leq Y_l - Z \text{ and } Y_l \geq \alpha_2 Z$$

for some constants $\alpha_1$ and $\alpha_2$. Here, $0 \leq < \alpha_1 \leq 0.2$, $0 \leq \alpha_2 \leq 5$, and it can be recommended to use $\alpha_1 = 0.05$ and $\alpha_2 = 3$. The set $\Omega_d^{'}$ can be seen as containing the delay indexes corresponding to multipath powers. The RSCP can now be computed as

$$RSCP = \frac{1}{N_c sf} \sum_{d \in \Omega_d^{'}} (S_d - Z)$$

Here, $Z$ is interpreted as the noise power that is subtracted from the peak power $S_d$. This is because $S_d$ contains both the noise and signal energy (if it exists) from the multipath delay.

The center of gravity (COG) method is now described. The center of gravity for the time delays is computed as

$$\tau = \frac{\sum_{d \in \Omega_d} \tau_d (S_d - Z)}{\sum_{d \in \Omega_d} (S_d - Z)}$$

.

Here, $\tau_d$ is the time delay corresponding to the index $d$.

The computed center of gravity values may further be filtered, i.e.

$$\tau_{filt}^{(n+1)} = \lambda \tau_{filt}^{(n)} + (1 - \lambda)\tau$$

where the index $n$ enumerates the activations of the path-searcher over time. Typically, $0.6 \leq \lambda \leq 0.99$, $\lambda = 0.9$ can be recommended. The new path-searcher window can now be positioned with $\tau_{filt}^{(n+1)}$ at its center. Using a window with the delays equidistantly spaced, the time delay $\tau_{filt}^{(n+1)}$ will correspond to the delay index $d = D/2$.

Here, the filtered center of gravity value is used as the center position of the path searcher window, but it should be noted that the window may also be positioned asymmetrically around the center of gravity value. Because of the space loss, the shape of the power delay profile may exhibit exponential decay, i.e. the energy is concentrated towards the beginning of the region of interest. For a reasonable coverage the window could thus be placed e.g. 1/3 ahead of and 2/3 behind the center of gravity value.

Thus it is seen that the calculation of the center of gravity, and thus also the position of the search window, is based on the presently known paths, i.e. the paths located within the searcher window used in the previous search. Figure 6 illustrates a situation where this method fails to find all the relevant paths. The upper part of the figure shows a situation where two multipath components $Y_a$ and $Y_b$ are detected, which are located with four chips between them. The center of gravity calculated from these two paths will be located between them, and thus the search window used for the next search will be positioned symmetrically around these two paths. The search window is shown 80 chips wide. As mentioned, one of the purposes of a path searcher is to find newly appeared paths that have not previously been detected. However, at the time for the next search the situation may have changed as shown in the lower part of figure 6, where the multipath component $Y_b$ has disappeared, while two new components $Y_c$ and $Y_d$ have appeared 50 and 54 chips from $Y_a$, respectively. The new components $Y_c$ and $Y_d$ are located outside the search window centered between $Y_a$ and $Y_b$, and thus they will not be found by the path searcher. This means that two thirds of the energy transmitted from the base station is lost. Further, they will not be used in the calculation of the next center of gravity, and therefore, as shown, the search window will continue to be centered around $Y_a$, even for many subsequent searches. If, however, the center of gravity could have been calculated from all three multipath components $Y_a$, $Y_c$ and $Y_d$, the search window would have been positioned as the alternative search window shown at the bottom of figure 6, and the two new paths would have been detected in the next search.

Thus it is seen that the search window is actually wide enough, it is just not positioned correctly. Of course, this problem could be solved by simply using a wider search window, but performing all the necessary calculations for a sufficiently wider window would increase considerably the memory consumption and the needed computational resources, and remembering that 24 cells need to be monitored continuously, such a solution will not be possible in a mobile terminal. Instead, a method is described below, in which the size of the search window itself is maintained, while the center of gravity is calculated based on a range of delay values that is larger than the search window.

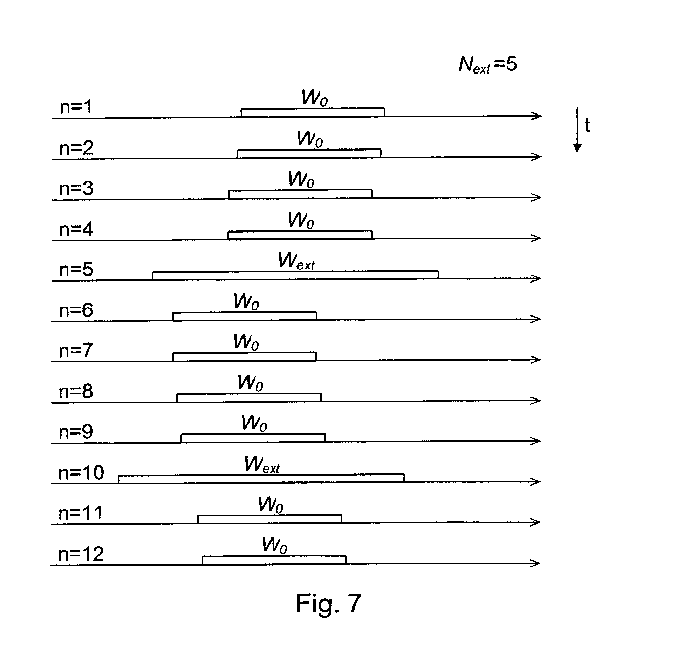

One way of implementing the larger range of delay values for the calculation of the center of gravity is to perform the calculation of the center of gravity (and the path search, although the path search itself may also be performed at a higher rate) with the normal search window as described above, and then intermittently, e.g. for every 5th or 10th search, search for paths in a wider or extended window and use these for the calculation of the center of gravity. The number of center of gravity calculations carried out between each calculation using the extended window may be designated as $N_{ext}$, i.e. if $N_{ext} = 10$, the extended window is used in every 10th center of gravity calculation. An example of this is illustrated in figure 7. In the example, $N_{ext} = 5$, and $n$ enumerates the number of activations of the center of gravity calculation. At the first four activations, i.e. $n = 1, ..., 4$, the normal search window $W_0$ (e.g. 80 chips wide) is used, and it is seen that for each activation the position of the window may be moved slightly due to corresponding movements of the actual paths. Then, however, for the 5th activation a wider window $W_{ext}$ is used for the calculation of the new center of gravity, and as seen for $n = 6$, the normal search window $W_0$ has been moved to a new position indicating that the wider window actually found a new path that had not previously been detected by the normal search window $W_0$. Again for $n = 10$, the wider window $W_{ext}$ is used for the calculation of the new center of gravity, and so on.

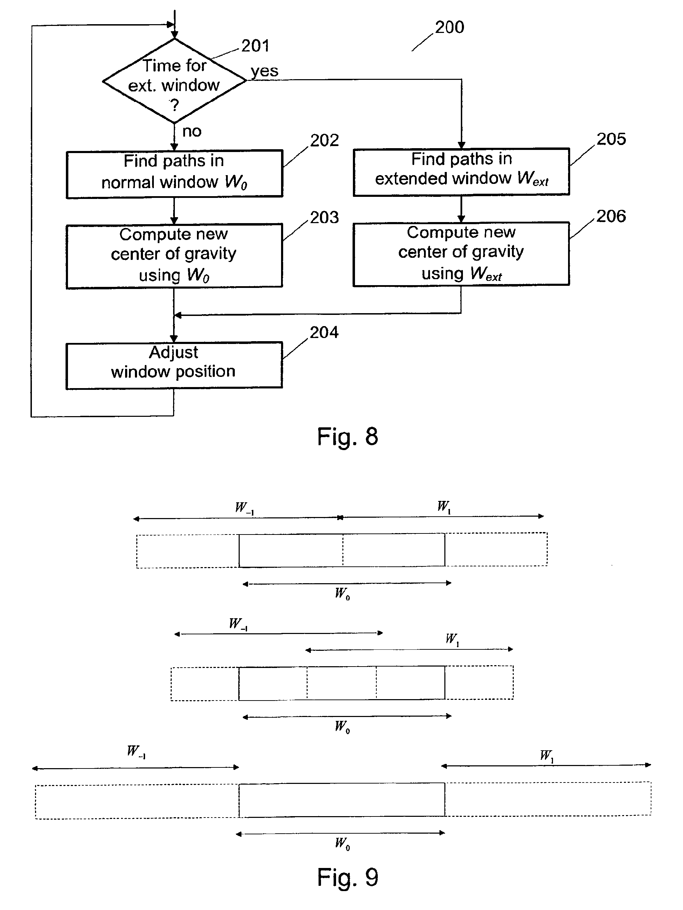

A structure of a corresponding method is illustrated in the flow chart 200 in figure 8, which is activated each time a new center of gravity is to be calculated. It is noted that when the receiver is switched on for the first time, the system has to be initiated, which is not shown in the figure. Typically, this can be done with a cell searcher, which is an initial search that delivers only one path and that is only done once.

In step 201 it is checked whether the normal or the extended window should be used for the next center of gravity calculation. This can be done based on a fixed schedule, e.g. as suggested above by using the wider window every 5th or 10th time ($N_{ext}$ = 5 or 10), but the decision may also be based on other criteria.

If the normal window $W_0$ is to be used, the relevant paths in that window are found in step 202. Typically, this will of course be an integrated part of the normal path search process. Having found the path components, the center of gravity can now be calculated in step 203 as described above. In step 204 the position of the next search window is then adjusted to correspond to the new center of gravity.

If it was decided in step 201 that it was time to use the extended search window $W_{ext}$ for the next center of gravity calculation, the paths that are present in that wider window are found in step 205. This can be done by simply performing the normal path search process for the complete extended search window, or the path search process is performed for the normal search window and then combined with a special search performed only for those parts of the extended window that are not included in the normal window. When the paths are found, the center of gravity can be calculated in step 206 in the same way as in step 203, but of course including all paths found in the extended search window. Then as before, the position of the next search window is then adjusted in step 204 to correspond to the new center of gravity.

It was mentioned that the calculation of the center of gravity based on a wider window than the one used for the normal path search could be done intermittently, e.g. for every 5th or 10th search. However, the wider window may also be used for each center of gravity calculation, although the reduction in memory consumption and computational resources is then rather small, but if the path search is performed at a higher rate than the center of gravity calculations, there will still be a reduction when the normal search window is used for those path searches that are not combined with a center of gravity calculation. Further, the wider window needs only be used for the calculation of the center of gravity, while only paths in the normal are stored and reported to the delay estimator.

Alternatively to simply searching for paths in an extended window, when it is time for the extended search, the path searcher can be run a total of three times, once for the reference window $W_0$, i.e. the window we base our measurement reporting on, and then for two other window locations $W_{-1}$ and $W_1$. Observe that it is here implicitly assumed that the path searcher computes values $Y_d$ for a set of delays indexed by $d = 1,...,D$ and the delays are equidistantly spaced. These two windows can be of the same size as $W_0$, but they may also have different sizes. Further, they may be positioned in different locations in relation to $W_0$. Figure 9 shows different locations of the windows $W_0$, $W_{-1}$ and $W_1$, and in this case $W_{-1}$ and $W_1$ are shown with the same size as $W_0$. In the lower example, the windows $W_{-1}$ and $W_1$ are shown contiguous to $W_0$, so that the three windows together form a window three times the size of $W_0$. The windows $W_{-1}$ and $W_1$ may also be contiguous to each other so that an end point of each coincides with the midpoint of window $W_0$, as shown in the upper example, or they may even overlap each other as shown in the middle.

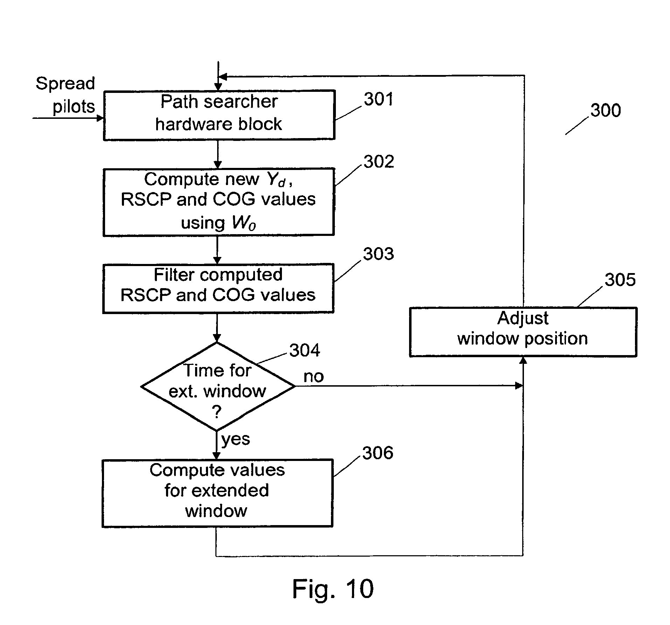

Below a specific example of an embodiment is described in detail in which the window configuration is used, where one of the end points of window $W_{-1}$ and $W_1$ coincides with the midpoint of window $W_0$, i.e. the upper configuration in figure 9. An extended window is used intermittently, i.e. once for every $N_{ext}$ center of gravity calculations, and in this example the extended window is further used a number $N_{ext,update}$ of times, and the results filtered, before the center of gravity is actually updated. The example is illustrated in the flow chart 300 in figure 10.

The spread pilots are supplied to the path searcher hardware block in step 301. From these pilot signals the new multipath components $Y_d$, the new RSCP value and the new center of gravity are computed for the normal search window $W_0$ in step 302. All these calculations have been described earlier. Filtered versions of the RSCP value and the center of gravity are then computed for window $W_0$ in step 303, also using the calculations presented earlier. In step 304, the method checks if paths outside of the normal search window $W_0$ need to be investigated, i.e. if the extended window should be used. If the answer is 'No', the location of the path searcher window is updated in step 305 with the new center of the window given by the filtered center of gravity. If the answer is 'Yes', we proceed to step 306, where an extended search over a wider window will be conducted.

When using the extended search the path searcher will, as mentioned above, be run a total of three times, once for the reference window $W_0$, which has actually already been done in steps 302 and 303, and then for the two other window locations $W_{-1}$ and $W_1$. Again it is implicitly assumed that the path searcher computes values $Y_d$ for a set of delays indexed by $d = 1,..., D$ with the delay values equidistantly spaced. In the steps described in more detail below, we compute filtered RSCP or $E_c/I_o$ values along with filtered relative center of gravity values for all windows. Together they are combined to give a new location for the $W_o$ window, with the purpose of capturing more RSCP power.

As mentioned, the extended window calculation is done less frequently than the normal center of gravity calculation in steps 302 and 303. For the following calculations, index $n$ enumerates the number of activations that adjust the window $W_o$ (step 305) using the (normal or extended) center of gravity method, i.e. activations of the flow chart 300. Similarly, $m$ enumerates the activations of the extended window method described below. When the system is started, $n$ and $m$ are both set to 1. The scheduling of step 304 is proposed to be fixed so that for every $N_{ext}$ center of gravity calculations in steps 302 and 303, i.e. each time $n$ equals a multiple of $N_{ext}$ ( $n$ mod $N_{ext}$ = 0), we perform an additional extended window search. Here, we can select $1 \leq N_{ext} \leq 10$ with $N_{ext}$ = 5 as a recommended value. Finally, in step 305, we adjust the location of the new window $W_0$.

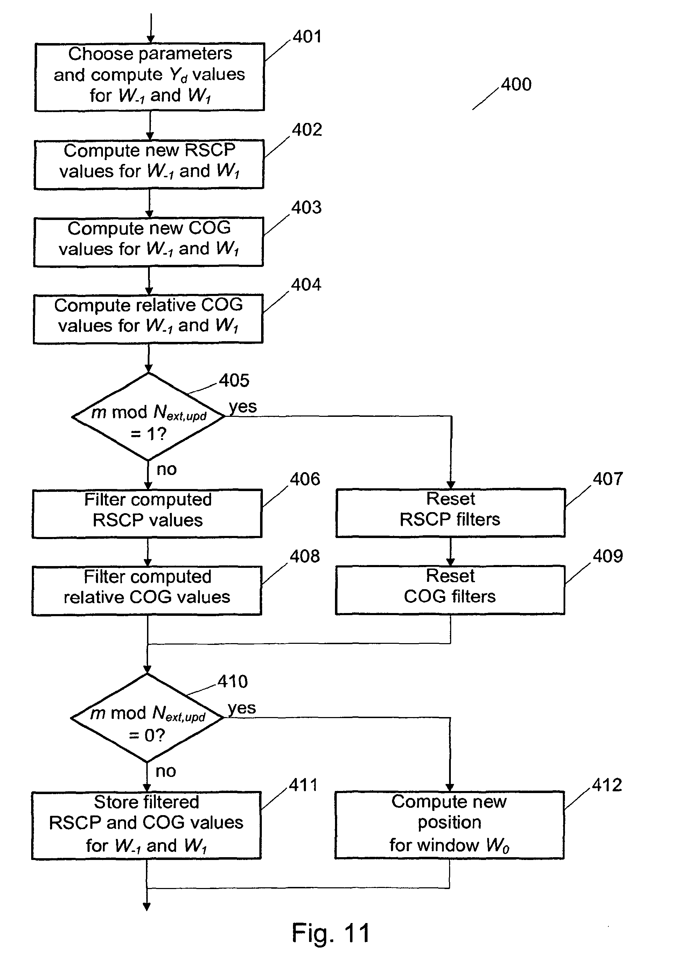

Below, a more detailed description of the extended window search in step 306 is given, corresponding to the flow chart 400 in figure 11. First in step 401, a number of filter parameters and other parameters are chosen, such as filter parameters $\hat{\lambda}_0, \hat{\lambda}_1$ for the RSCP or $E_c/I_0$ values and the filter parameter $\bar{\lambda}$ for the difference in center of gravity delays between the different windows, i.e. $W_0$, $W_{-1}$, and $W_1$. These parameters and their use will be described below. Further, a parameter $N_{ext,update}$, which says when to actually update the window position using the extended window method. We can select e.g. $1 \leq N_{ext,update} \leq 20$ with $N_{ext,update}$ =10 as a recommended value. Here, it is noted that $N_{ext}$ is the number of center of gravity calculations between each calculation with the extended window, while $N_{ext,update}$ is the number of extended window calculations before the center of gravity is actually updated. Further in step 401, the $Y_d$ values from windows $W_{-1}$ and $W_1$ are computed in addition to the $Y_d$ values for window $W_o$, which were already calculated in step 302.

In the next steps, we can compute the RSCP or $E_c/I_o$ values for window $W_{-1}$ and $W_1$ and filter them. For the purpose of reducing the notation and ease of presentation, in the following we only consider RSCP (i.e. not $E_c/I_o$) as the quality indicator pertaining to the multipath power content in the different windows. In step 402, the new RSCP values for the two windows $W_{-1}$ and $W_1$ are computed as it was done for window $W_o$ in step 302. Observe that the RSCP values for $W_{-1}$ and $W_1$ need only use the delays that do not belong to the $W_0$ window.

Further, in step 403 the center of gravity values $\tau_{-1}$ and $\tau_1$ for windows $W_{-1}$ and $W_1$ are computed. It is observed, that in this embodiment the center of gravity values $\tau_{-1}$ and $\tau_1$ for $W_{-1}$, and $W_1$ only use the delays that do not belong to the $W_0$ window.

In step 404, the filtered center of gravity $\tau_{filt}^{(n)}$ computed in step 303 is then subtracted from the computed center of gravity values $\tau_{-1}$ and $\tau_1$ for windows $W_{-1}$ and $W_1$ in order to obtain the relative center of gravity values $\Delta_{-1}$ and $\Delta_1$. It is noted that $\tau_{filt}^{(n)}$ is the center of window $W_0$. The relative center of gravity values $\Delta_{-1}$, and $\Delta_1$ are calculated as

$$\Delta_{-1} = \tau_{-1} - \tau_{filt}^{(n)} \qquad \text{and} \qquad \Delta_1 = \tau_1 - \tau_{filt}^{(n)} .$$

In order to reset the filters after $N_{ext,update}$ extended window calculations, i.e. each time the new center of gravity has been updated based on the extended window, it is now decided in step 405 whether $m$ mod $N_{ext,update}$ =1 (for the preferred value $N_{ext,update}$ =10 this means $m$ = 1, 11, 21, 31,...) or not.

If $m$ mod $N_{ext,upadate} \neq 1$, the two new RSCP values for windows $W_{-1}$ and $W_1$ are included (in step 406) into the corresponding filtered RSCP values, i.e.

$$RSCP_{filt,-1}^{(m+1)} = \hat{\lambda}_1 RSCP_{filt,-1}^{(m)} + (1-\hat{\lambda}_1) RSCP_{-1} , \text{ and}$$
$$RSCP_{filt,1}^{(m+1)} = \hat{\lambda}_1 RSCP_{filt,1}^{(m)} + (1-\hat{\lambda}_1) RSCP_1 \qquad\qquad (1)$$

If, however, $m$ mod $N_{ext,update}$ =1, the filters are reset in step 407, i.e.

$$RSCP_{filt,-1}^{(m+1)} = RSCP_{-1} \qquad \text{and} \qquad RSCP_{filt,1}^{(m+1)} = RSCP_1 .$$

This means that the RSCP values for windows $W_{-1}$ and $W_1$ are filtered over $N_{ext,update}$ measurements. Then the window position is updated (as described below) based on the results, and the RSCP filters are reset.

It is noted that in step 303 a filtered RSCP value was also compute for window $W_0$ as

$$RSCP_{filt,0}^{(n+1)} = \hat{\lambda}_0 RSCP_{filt,0}^{(n)} + (1 - \hat{\lambda}_0) RSCP_0. \qquad (2)$$

We have here used the time index $n$ because equation (2) is done in step 303. Since the index $n$ is incremented much faster than index $m$, we can and should filter harder in equation (2) than in equation (1) to keep the filtered RSCP values comparable in time. Typically, $0.6 \leq \lambda_1 \leq 0.9$, $\lambda_1 = 0.8$ being recommended, and $\lambda_0 = (\lambda_1)^{1/Next}$.

Also the relative center of gravity values $\Delta_{-1}$ and $\Delta_1$ are filtered similarly to the RSCP values. If $m \bmod N_{ext,update} \neq 1$, then the two new relative center of gravity values for windows $W_{-1}$ and $W_1$ are included (in step 408) into the corresponding filtered relative center of gravity values, i.e.

$$\Delta_{filt,-1}^{(m+1)} = \overline{\lambda} \Delta_{filt,-1}^{(m)} + (1 - \overline{\lambda})\Delta_{-1} \quad \text{and} \quad \Delta_{filt,1}^{(m+1)} = \overline{\lambda} \Delta_{filt,1}^{(m)} + (1 - \overline{\lambda})\Delta_1.$$

Here, $\overline{\lambda} = \hat{\lambda}_1$ may be used.

If $m \bmod N_{ext,update} = 1$, then the filters are reset in step 409, i.e.

$$\Delta_{filt,-1}^{(m+1)} = \Delta_{-1} \qquad \text{and} \qquad \Delta_{filt,1}^{(m+1)} = \Delta_1.$$

As mentioned, the window position is only updated based on the extended window when the values for windows $W_{-1}$ and $W_1$ have been filtered over $N_{ext,update}$ measurements. Thus, it will now be decided in step 410 whether $m \bmod N_{ext,update} = 0$ (i.e. $m = 10, 20, 30, 40, 50,...$ for the preferred value $N_{ext,update} = 10$) or not.

If $m \bmod N_{ext,update} \neq 0$, the values $RSCP_{filt,-1}^{(m+1)}$, $RSCP_{filt,1}^{(m+1)}$, $\Delta_{filt,-1}^{(m+1)}$ and $\Delta_{filt,1}^{(m+1)}$ are just stored in step 411 until the next time we revisit the flow chart 400. Only the values $RSCP_{filt,0}^{(n+1)}$ and $\tau_{filt}^{(n+1)}$ are updated, but this has already been done in step 303.

If $m \bmod N_{ext,update} = 0$, the center of gravity is updated in step 412 using the extended method. The center $\tau_{filt}^{(n+1)}$ of the new position of the window $W_0$ may be computed as a weighted average of the window $W_0$ and one of the two windows $W_{-1}$ and $W_1$, depending on which one has the largest RSCP value. Thus if $RSCP_{filt,-1}^{(m+1)} > RSCP_{filt,1}^{(m+1)}$, $\tau_{filt}^{(n+1)}$ is calculated as

$$\tau_{filt}^{(n+1)} = \frac{RSCP_{filt,-1}^{(m+1)}(\tau_{filt}^{(n)} + \Delta_{filt,-1}^{(m+1)}) + RSCP_{filt,0}^{(n+1)}\tau_{filt}^{(n)}}{RSCP_{filt,-1}^{(m+1)} + RSCP_{filt,0}^{(n+1)}}.$$

Otherwise, $\tau_{filt}^{(n+1)}$ is calculated as

$$\tau_{filt}^{(n+1)} = \frac{RSCP_{filt,1}^{(m+1)}(\tau_{filt}^{(n)} + \Delta_{filt,1}^{(m+1)}) + RSCP_{filt,0}^{(n+1)}\tau_{filt}^{(n)}}{RSCP_{filt,1}^{(m+1)} + RSCP_{filt,0}^{(n+1)}}.$$

Here, $\tau_{filt}^{(n)}$, is the latest provided value. The next time $RSCP_{filt,0}^{(n+1)}$ is updated, it is set to its instantaneous value.

It should be noted that the center $\tau_{filt}^{(n+1)}$ of the new position of the window $W_0$ can also be computed in other ways. One other way is to weight all three windows instead of only two. Thus $\tau_{filt}^{(n+1)}$ may also be calculated as

$$\tau_{filt}^{(n+1)} = \frac{RSCP_{filt,-1}^{(m+1)}(\tau_{filt}^{(n)} + \Delta_{filt,-1}^{(m+1)}) + RSCP_{filt,0}^{(n+1)}\tau_{filt}^{(n)} + RSCP_{filt,1}^{(m+1)}(\tau_{filt}^{(n)} + \Delta_{filt,1}^{(m+1)})}{RSCP_{filt,-1}^{(m+1)} + RSCP_{filt,0}^{(n+1)} + RSCP_{filt,1}^{(m+1)}}.$$

A further possibility is to store the absolute values of the center of gravity values $\tau_{filt,-1}^{(m+1)}$ and $\tau_{filt,1}^{(m+1)}$ for the windows $W_{-1}$ and $W_1$, instead of their relative values $\Delta_{filt,-1}^{(m+1)}$ and $\Delta_{filt,1}^{(m+1)}$. If the path delay profile is fixed, but the clock drift is high, this method is, however, less advantageous.

After the center of gravity has been updated in step 412 or the filtered values stored in step 411, the process returns to step 305 where the position of the new window $W_0$ is adjusted in according to the new center of gravity that was calculated in either step 303 or step 412.

It is noted that the system is started with $n = m = 1$. This is to make sure that we have reliable weights before we do the adjustment in step 305 based on a center of gravity calculated in step 412. Meanwhile, the center $\tau_{filt}^{(n+1)}$ of the new position of the window $W_0$ is determined only by the center of gravity calculated in step 303.

In the method described above, the values for both windows $W_{-1}$ and $W_1$ are calculated simultaneously, i.e. in the same activation of the flow chart 400, corresponding to step 306. However, there is nothing that forces us to schedule the two extended window searches based on the same $W_0$ window. We could split up the evaluation of the extended windows at different time points, so that the calculations are performed for $W_{-1}$ at one time (i.e. one activation of flow chart 400) and then for $W_1$ the next time.

Although the embodiments described above refer to positioning the search window by the calculation of the center of gravity of the search window, an extended window, and/or supplementary windows, alternative expectation values could be calculated for the windows and the positioning of the search window be based on those other values.

It should be emphasized that the term "comprises/comprising" when used in this specification is taken to specify the presence of stated features, integers, steps or components but does not preclude the presence or addition of one or more other features, integers, steps, components or groups thereof.

Although a preferred embodiment of the present invention has been described and shown, the invention is not restricted to it, but may also be embodied in other ways within the scope of the subject-matter defined in the following claims.

**Claims**

1. A method of detecting multipath components in a time-varying fading radio channel (3, 4, 6) in a digital wireless communications system in which individual multipath components of a signal transmitted through said channel are received with individual delays ($\tau_a$, $\tau_b$, $\tau_c$) within a range of possible delay values, the method comprising the steps of:

   • calculating repetitively a delay profile indicating a magnitude ($Y$) for each of a number of individual delay values;
   • searching repetitively for new multipath components in a search window ($W_0$) constituting a subset of said range of possible delay values; and
   • positioning said search window ($W_0$) at least intermittently based on at least one delay profile previously calculated for a range ($W_{ext}$; $W_0$, $W_{-1}$, $W_1$) of delay values that is wider than the search window ($W_0$) in which the searching for new multipath components is performed,

   the method further comprising the step of generating said wider range ($W_{ext}$; $W_0$, $W_{-1}$, $W_1$) of delay values by combining a previous search window ($W_0$) with two additional windows ($W_{-1}$, $W_1$) having the same size as the previous search window and being arranged contiguous to each other symmetrically around the center of the previous search window ($W_0$),
   **characterized in that** the step of positioning said search window at least intermittently based on at least one delay profile calculated for a wider range further comprises the steps of:

   • calculating a center of gravity for each of said previous search window ($W_0$) and said two additional windows ($W_{-1}$, $W_1$);

• calculating a combined center of gravity by combining the center of gravity for said previous search window ($W_0$) with the center of gravity for at least one of said two additional windows ($W_{-1}$, $W_1$); and
• positioning the search window ($W_0$) around said combined center of gravity.

2. A method according to claim 1, **characterized in that** the method further comprises the step of alternating between

• searching a number of times in a search window positioned based on a delay profile calculated for a previous search window ($W_0$) ; and
• searching a number of times in a search window positioned based on a delay profile calculated for a range ($W_{ext}$; $W_0$, $W_{-1}$, $W_1$) of delay values wider than said search window.

3. A method according to claim 1 or 2, **characterized in that** the method further comprises the steps of:

• calculating a delay profile for the wider range ($W_{ext}$; $W_0$, $W_{-1}$, $W_1$) of delay values a number of times;
• calculating a filtered delay profile from said number of calculated delay profiles; and
• using said filtered delay profile as the delay profile calculated for the wider range of delay values.

4. A method according to claim 1, **characterized in that** the search window ($W_0$) is positioned with said calculated center of gravity as its center.

5. A method according to claim 1, **characterized in that** the step of calculating a combined center of gravity comprises the step of calculating a relative center of gravity value for each of said two additional windows ($W_{-1}$, $W_1$) by subtracting the center of gravity for said previous search window ($W_0$) from the center of gravity calculated for each of said two additional windows ($W_{-1}$, $W_1$).

6. A method according to claim 5, **characterized in that** the step of calculating a combined center of gravity further comprises the steps of:

• calculating said relative center of gravity values for the two additional windows ($W_{-1}$, $W_1$) a number of times; and
• calculating a filtered relative center of gravity value for each of the two additional windows ($W_{-1}$, $W_1$) from said number of calculated relative center of gravity values.

7. A method according to claim 6, **characterized in that** the method further comprises performing repetitively the steps of:

• resetting said filtered relative center of gravity values;
• calculating said relative center of gravity values for the two additional windows ($W_{-1}$, $W_1$) a number of times; and updating for each pair of new relative center of gravity values said filtered relative center of gravity values by including the pair of new relative center of gravity values; and
• calculating said combined center of gravity by combining the center of gravity for said previous search window ($W_0$) with at least one of said updated filtered relative center of gravity values.

8. A receiver having means (11, 12, 13) for detecting multipath components in a time-varying fading radio channel (3, 4, 6) in a digital wireless communications system in which individual multipath components of a signal transmitted through said channel are received with individual delays ($\tau_a$, $\tau_b$, $\tau_c$) within a range of possible delay values, the receiver being adapted to:

• calculate repetitively a delay profile indicating a magnitude ($Y$) for each of a number of individual delay values;
• search repetitively for new multipath components in a search window ($W_0$) constituting a subset of said range of possible delay values; and
• position said search window ($W_0$) based at least intermittently on at least one delay profile previously calculated for a range ($W_{ext}$ ; $W_0$, $W_{-1}$, $W_1$) of delay values that is wider than the search window ($W_0$) in which the receiver is adapted to search for new multipath components,

the receiver further being adapted to generate said wider range ($W_{ext}$; $W_0$, $W_{-1}$, $W_1$) of delay values by combining a previous search window ($W_0$) with two additional windows ($W_{-1}$, $W_1$) having the same size as the previous search window ($W_0$) and being arranged contiguous to each other symmetrically around the center of the previous search window ($W_0$),

**characterized in that** the receiver is further adapted to:

- calculate a center of gravity for each of said previous search window ($W_0$) and said two additional windows ($W_{-1}$, $W_1$) ;
- calculate a combined center of gravity by combining the center of gravity for said previous search window ($W_0$) with the center of gravity for at least one of said two additional windows ($W_{-1}$, $W_1$); and
- position the search window ($W_0$) around said combined center of gravity.

**9.** A receiver according to claim 8, **characterized in that** the receiver is further adapted to alternate between

- searching a number of times in a search window positioned based on a delay profile calculated for a previous search window ($W_0$) ; and
- searching a number of times in a search window positioned based on a delay profile calculated for a range ($W_{ext}$ ; $W_0$, $W_{-1}$, $W_1$) of delay values wider than said search window.

**10.** A receiver according to claim 8 or 9, **characterized in that** the receiver is further adapted to

- calculate a delay profile for the wider range ($W_{ext}$; $W_0$, $W_{-1}$, $W_1$) of delay values a number of times;
- calculate a filtered delay profile from said number of calculated delay profiles; and
- use said filtered delay profile as the delay profile calculated for the wider range of delay values.

**11.** A receiver according to claim 8, **characterized in that** the receiver is further adapted to position the search window ($W_0$) with said calculated center of gravity as its center.

**12.** A receiver according to claim 8, **characterized in that** the receiver is further adapted to calculate a relative center of gravity value for each of said two additional windows ($W_{-1}$, $W_1$) by subtracting the center of gravity for said previous search window ($W_0$) from the center of gravity calculated for each of said two additional windows ($W_{-1}$, $W_1$).

**13.** A receiver according to claim 12, **characterized in that** the receiver is further adapted to:

- calculate said relative center of gravity values for the two additional windows ($W_{-1}$, $W_1$) a number of times; and
- calculate a filtered relative center of gravity value for each of the two additional windows ($W_{-1}$, $W_1$) from said number of calculated relative center of gravity values.

**14.** A receiver according to claim 13, **characterized in that** the receiver is further adapted to:

- reset said filtered relative center of gravity values;
- calculate said relative center of gravity values for the two additional windows ($W_{-1}$, $W_1$) a number of times; and update for each pair of new relative center of gravity values said filtered relative center of gravity values by including the pair of new relative center of gravity values; and
- calculate said combined center of gravity by combining the center of gravity for said previous search window ($W_0$) with at least one of said updated filtered relative center of gravity values.

**15.** A receiver according to any one of claims 8 to 14, **characterized in that** the receiver is adapted for use in a Wideband Code Division Multiple Access system.

**16.** A computer program comprising program code means for performing the steps of any one of the claims 1 to 7 when said computer program is run on a computer.

**17.** A computer program according to claim 16, **characterized in that** the computer program is stored on a computer readable medium.

**Patentansprüche**

**1.** Verfahren eines Detektierens von Mehrwege-Komponenten in einem zeitlich-variierenden, abklingenden Funkkanal (3, 4, 6) in einem digitalen, drahtlosen Kommunikationssystem, in dem einzelne Mehrwege-Komponenten eines Signals, das über den Kanal übertragen wird, mit einzelnen Verzögerungen ($\tau_a$, $\tau_b$, $\tau_c$) innerhalb eines Bereichs von möglichen Verzögerungswerten empfangen werden, wobei das Verfahren die Schritte umfasst:

- wiederholendes Berechnen eines Verzögerungsprofils, das eine Größe (Y) für jeden einer Anzahl von einzelnen Verzögerungswerten anzeigt;
- wiederholendes Suchen nach neuen Mehrwege-Komponenten in einem Suchfenster (Wo), das einen Untersatz des Bereichs von möglichen Verzögerungswerten bildet; und
- Positionieren des Suchfensters ($W_0$) zumindest intermittierend basierend auf zumindest einem Verzögerungsprofil, das zuvor für einen Bereich $(W_{ext}; W_0, W_{-1}, W_1)$ von Verzögerungswerten berechnet ist, der breiter als das Suchfenster ($W_0$) ist, in dem das Suchen nach neuen Mehrwege-Komponenten durchgeführt wird,

wobei das Verfahren weiter den Schritt eines Erzeugens eines breiteren Bereichs $(W_{ext}; W_0, W_{-1}, W_1)$ von Verzögerungswerten durch Kombinieren eines vorherigen Suchfensters ($W_0$) mit zwei zusätzlichen Fenstern ($W_{-1}$, $W_1$) mit der gleichen Größe wie das vorherige Suchfenster umfasst, und die zusammenhängend miteinander, symmetrisch um das Zentrum des vorherigen Suchfensters ($W_0$) angeordnet sind,
**dadurch gekennzeichnet, dass** der Schritt eines Positionierens des Suchfensters zumindest intermittierend basierend auf zumindest einem Verzögerungsprofil, das für einen breiteren Bereich berechnet ist, weiter die Schritte umfasst:

- Berechnen eines Schwerpunktes für jedes des vorherigen Suchfensters ($W_0$) und der zwei zusätzlichen Fenster $(W_{-1}, W_1)$ ;
- Berechnen eines kombinierten Schwerpunktes durch Kombinieren der Schwerpunkte des vorherigen Suchfensters ($W_0$) mit dem Schwerpunkt für zumindest eines der zwei zusätzlichen Fenster $(W_{-1}, W_1)$; und
- Positionieren des Suchfensters ($W_0$) um den kombinierten Schwerpunkt.

2. Verfahren nach Anspruch 1, **dadurch gekennzeichnet, dass** das Verfahren weiter den Schritt eines Wechselns umfasst zwischen

- einem mehrmaligem Suchen in einem Suchfenster, das basierend auf einem Verzögerungsprofil positioniert ist, das für ein vorheriges Suchfenster ($W_0$) berechnet ist; und
- einem mehrmaligem Suchen in einem Suchfenster, das basierend auf ein Verzögerungsprofil positioniert ist, das für einen Bereich $(W_{ext}; W_0, W_{-1}, W_1)$ von Verzögerungswerten berechnet ist, der breiter als das Suchfenster ist.

3. Verfahren nach Anspruch 1 oder 2, **dadurch gekennzeichnet, dass** das Verfahren weiter die Schritte umfasst:

- mehrmaliges Berechnen eines Verzögerungsprofils für den breiteren Bereich $(W_{ext}; W_0, W_{-1}, W_1)$ von Verzögerungswerten;
- Berechnen eines gefilterten Verzögerungsprofils aus der Anzahl von berechneten Verzögerungsprofilen; und
- Verwenden des gefilterten Verzögerungsprofils als das Verzögerungsprofil, das für den breiteren Bereich von Verzögerungswerten berechnet ist.

4. Verfahren nach Anspruch 1, **dadurch gekennzeichnet, dass** das Suchfenster ($W_0$) mit dem berechneten Schwerpunkt als seinem Zentrum positioniert ist.

5. Verfahren nach Anspruch 1, **dadurch gekennzeichnet, dass** der Schritt eines Berechnens eines kombinierten Schwerpunktes den Schritt eines Berechnens eines relativen Schwerpunktwertes für jedes der zwei zusätzlichen Fenster $(W_{-1}, W_1)$ durch Subtrahieren des Schwerpunktes für das vorherige Suchfenster ($W_0$) von dem Schwerpunkt umfasst, der für jedes der zwei zusätzlichen Fenster $(W_{-1}, W_1)$ berechnet ist.

6. Verfahren nach Anspruch 5, **dadurch gekennzeichnet, dass** der Schritt eines Berechnens eines kombinierten Schwerpunktes weiter die Schritte umfasst:

- mehrmaliges Berechnen der relativen Schwerpunktwerte für die zwei zusätzlichen Fenster $(W_{-1}, W_1)$ ; und
- Berechnen eines gefilterten, relativen Schwerpunktwertes für jedes der zwei zusätzlichen Fenster $(W_{-1}, W_1)$ aus der Anzahl von berechneten, relativen Schwerpunktwerten.

7. Verfahren nach Anspruch 6, **dadurch gekennzeichnet, dass** das Verfahren weiter ein wiederholendes Durchführen der Schritte umfasst von:

• Zurücksetzen der gefilterten, relativen Schwerpunktwerte;
• mehrmaliges Berechnen der relativen Schwerpunktwerte für die zwei zusätzlichen Fenster ($W_{-1}$, $W_1$); und Aktualisieren der gefilterten, relativen Schwerpunktwerte für jedes Paar an neuen relativen Schwerpunktwerten durch Einschließen des Paares neuer relativer Schwerpunktswerte; und
• Berechnen des kombinierten Schwerpunktes durch Kombinieren des Schwerpunktes des vorherigen Suchfensters ($W_0$) mit zumindest einem der aktualisierten, gefilterten, relativen Schwerpunktwerte.

8.  Empfänger mit einer Vorrichtung (11, 12, 13) zum Detektieren von Mehrwege-Komponenten in einem zeitlich-variierenden, abklingenden Funkkanal (3, 4, 6) in einem digitalen, drahtlosen Kommunikationssystem, in dem einzelne Mehrwege-Komponenten eines Signals, das über den Kanal übertragen wird, mit einzelnen Verzögerungen ($\tau_a$, $\tau_b$, $\tau_c$) innerhalb eines Bereichs von möglichen Verzögerungswerten empfangen werden, wobei der Empfänger angepasst ist zum:

• wiederholenden Berechnen eines Verzögerungsprofils, das eine Größe ($Y$) für jeden einer Anzahl von einzelnen Verzögerungswerten anzeigt;
• wiederholenden Suchen nach neuen Mehrwege-Komponenten in einem Suchfenster ($W_0$), das einen Untersatz des Bereichs von möglichen Verzögerungswerten bildet; und
• Positionieren des Suchfensters ($W_0$) zumindest intermittierend basierend auf zumindest einem Verzögerungsprofil, das zuvor für einen Bereich ($W_{ext}$ ; $W_0$, $W_{-1}$, $W_1$) von Verzögerungswerten berechnet ist, der breiter als das Suchfenster ($W_0$) ist, in dem das Suchen nach neuen Mehrwege-Komponenten durchgeführt wird,

wobei der Empfänger angepasst ist, einen breiteren Bereich (Wext; W0 ,W-1, W1) von Verzögerungswerten durch Kombinieren eines vorherigen Suchfensters ($W_0$) mit zwei zusätzlichen Fenstern ($W_{-1}$, $W_1$) mit der gleichen Größe wie das vorherige Suchfenster zu erzeugen, und die zusammenhängend miteinander, symmetrisch um das Zentrum des vorherigen Suchfensters ($W_0$) angeordnet sind,
**dadurch gekennzeichnet, dass** der der Empfänger weiter angepasst ist zum:

• Berechnen eines Schwerpunktes für jedes des vorherigen Suchfensters ($W_0$) und der zwei zusätzlichen Fenster ($W_{-1}$, $W_1$) ;
• Berechnen eines kombinierten Schwerpunktes durch Kombinieren der Schwerpunkte des vorherigen Suchfensters ($W_0$) mit dem Schwerpunkt für zumindest eines der zwei zusätzlichen Fenster ($W_{-1}$, $W_1$); und
• Positionieren des Suchfensters ($W_0$) um den kombinierten Schwerpunkt.

9.  Empfänger nach Anspruch 8, **dadurch gekennzeichnet, dass** der Empfänger weiter angepasst ist, zu wechseln zwischen einem

• einem mehrmaligem Suchen in einem Suchfenster, das basierend auf einem Verzögerungsprofil positioniert ist, das für ein vorheriges Suchfenster ($W_0$) berechnet ist; und
• einem mehrmaligem Suchen in einem Suchfenster, das basierend auf ein Verzögerungsprofil positioniert ist, das für einen Bereich ($W_{ext}$; $W_0$, $W_{-1}$, $W_1$) von Verzögerungswerten berechnet ist, der breiter als das Suchfenster sind.

10.  Empfänger nach Anspruch 8 oder 9, **dadurch gekennzeichnet, dass** der Empfänger weiter angepasst ist zum:

• mehrmaligem Berechnen eines Verzögerungsprofils für den breiteren Bereich ($W_{ext}$; $W_0$, $W_{-1}$, $W_1$) von Verzögerungswerten;
• Berechnen eines gefilterten Verzögerungsprofils aus der Anzahl von berechneten Verzögerungsprofilen; und
• Verwenden des gefilterten Verzögerungsprofils als das Verzögerungsprofil, das für den breiteren Bereich von Verzögerungswerten berechnet ist.

11.  Empfänger nach Anspruch 8, **dadurch gekennzeichnet, dass** der Empfänger weiter angepasst ist, das Suchfenster ($W_0$) mit dem berechneten Schwerpunkt als seinem Zentrum zu positionieren.

12.  Empfänger nach Anspruch 8, **dadurch gekennzeichnet, dass** der Empfänger weiter angepasst ist, einen relativen Schwerpunktwertwert für jedes der zwei zusätzlichen Fenster ($W_{-1}$, $W_1$) durch Subtrahieren des Schwerpunktes für das vorherige Suchfenster ($W_0$) von dem Schwerpunkt zu berechnen, der für jedes der zwei zusätzlichen Fenster

*(W<sub>-1</sub>, W<sub>1</sub>)* berechnet ist.

**13.** Empfänger nach Anspruch 12, **dadurch gekennzeichnet, dass** der Empfänger weiter angepasst ist zum:

• mehrmaligem Berechnen der relativen Schwerpunktwerte für die zwei zusätzlichen Fenster $(W_{-1}, W_1)$; und
• Berechnen eines gefilterten, relativen Schwerpunktwertes für jedes der zwei zusätzlichen Fenster $(W_{-1}, W_1)$ aus der Anzahl von berechneten, relativen Schwerpunktwerten.

**14.** Empfänger nach Anspruch 13, **dadurch gekennzeichnet, dass** der Empfänger weiter angepasst ist, zum:

• Zurücksetzen der gefilterten, relativen Schwerpunktwerte;
• mehrmaligem Berechnen der relativen Schwerpunktwerte für die zwei zusätzlichen Fenster $(W_{-1}, W_1)$; und Aktualisieren der gefilterten, relativen Schwerpunktwerte für jedes Paar an neuen relativen Schwerpunktwerten durch Einschließen des Paares neuer relativer Schwerpunktswerte; und
• Berechnen des kombinierten Schwerpunktes durch Kombinieren des Schwerpunktes des vorherigen Such-fensters $(W_0)$ mit zumindest einem der aktualisierten, gefilterten, relativen Schwerpunktwerte.

**15.** Empfänger nach einem der Ansprüche 8-14, **dadurch gekennzeichnet, dass** der Empfänger angepasst zur Verwendung in einem Breitband-Code-Multiplex-System ist.

**16.** Computerprogramm mit einer Programm-Code-Vorrichtung zum Durchführen der Schritte nach einem der Ansprüche 1-7, wenn das Computerprogramm auf einem Computer laufengelassen wird.

**17.** Computerprogramm nach Anspruch 16, **dadurch gekennzeichnet, dass** das Computerprogramm auf einem Computer-lesbaren Medium gespeichert ist.


### Revendications

**1.** Procédé de détection de composantes de chemins multiples dans un canal (3, 4, 6) de radio sujet à des évanouissements variables dans le temps dans un système de communications numériques sans fil dans lequel des composantes de chemins multiples individuelles d'un signal émis par l'intermédiaire dudit canal sont reçues avec des retards $(\tau_a, \tau_b, \tau_c)$ individuels à l'intérieur d'une plage de valeurs de retard possibles, le procédé comportant des étapes :

* de calcul de façon répétitive d'un profil de retard indiquant une magnitude (Y) pour chacune d'un nombre de valeurs de retard individuelles ;
* de recherche de façon répétitive de nouvelles composantes de chemins multiples dans une fenêtre $(W_0)$ de recherche constituant un sous-ensemble de ladite plage de valeurs de retard possibles ; et
* de positionnement de ladite fenêtre $(W_0)$ de recherche sur la base de façon au moins intermittente d'au moins un profil de retard calculé précédemment pour une plage $(W_{ext} ; W_0, W_{-1}, W_1)$ de valeurs de retard qui est plus large que la fenêtre $(W_0)$ de recherche dans laquelle est effectuée la recherche de nouvelles composantes de chemins multiples,

le procédé comportant de plus l'étape de production de ladite plage $(W_{ext} ; W_0, W_{-1}, W_1)$ plus large de valeurs de retard en combinant une fenêtre $(W_0)$ de recherche précédente avec deux fenêtres $(W_{-1}, W_1)$ additionnelles ayant la même taille que la fenêtre de recherche précédente et étant agencées de façon contiguë l'une à l'autre symétriquement autour du centre de la fenêtre $(W_0)$ de recherche précédente,
**caractérisé en ce que** l'étape de positionnement de ladite fenêtre de recherche sur la base de façon au moins intermittente d'au moins un profil de retard calculé pour une plage plus large comporte de plus les étapes :

* de calcul d'un centre de gravité pour chacune de ladite fenêtre $(W_0)$ de recherche précédente et desdites deux fenêtres $(W_{-1}, W_1)$ additionnelles ;
* de calcul d'un centre de gravité combiné en combinant le centre de gravité pour ladite fenêtre $(W_0)$ de recherche précédente avec le centre de gravité pour au moins l'une desdites deux fenêtres $(W_{-1}, W_1)$ additionnelles ; et
* de positionnement de la fenêtre $(W_0)$ de recherche autour dudit centre de gravité combiné.

**2.** Procédé selon la revendication 1, **caractérisé en ce que** le procédé comporte de plus l'étape consistant à alterner entre

* une recherche un nombre de fois d'une fenêtre ($W_0$) de recherche précédente dans une fenêtre de recherche positionnée sur la base d'un profil de retard calculé ; et
* une recherche un nombre de fois d'une plage ($W_{ext}$ ; $W_0$, $W_{-1}$, $W_1$) de valeurs de retard plus large que ladite fenêtre de recherche dans une fenêtre de recherche positionnée sur la base d'un profil de retard calculé.

**3.** Procédé selon la revendication 1 ou 2, **caractérisé en ce que** le procédé comporte de plus les étapes :

* de calcul un nombre de fois d'un profil de retard pour la plage ($W_{ext}$ ; $W_0$, $W_{-1}$, $W_1$) plus large de valeurs de retard
* de calcul d'un profil de retard filtré à partir dudit nombre de profils de retard calculés ; et
* d'utilisation dudit profil de retard filtré comme le profil de retard calculé pour la plage plus large de valeurs de retard.

**4.** Procédé selon la revendication 1, **caractérisé en ce que** la fenêtre ($W_0$) de recherche est positionnée en ayant comme centre ledit centre de gravité calculé.

**5.** Procédé selon la revendication 1, **caractérisé en ce que** l'étape de calcul d'un centre de gravité combiné comporte l'étape de calcul d'une valeur relative de centre de gravité pour chacune desdites deux fenêtres ($W_{-1}$, $W_1$) additionnelles en soustrayant le centre de gravité pour ladite fenêtre ($W_0$) de recherche précédente du centre de gravité calculé pour chacune desdites deux fenêtres ($W_{-1}$, $W_1$) additionnelles.

**6.** Procédé selon la revendication 5, **caractérisé en ce que** l'étape de calcul d'un centre de gravité combiné comporte de plus les étapes :

* de calcul un nombre de fois desdites valeurs de centre de gravité relatives pour les deux fenêtres ($W_{-1}$, $W_1$) additionnelles ; et
* de calcul d'une valeur de centre de gravité relative filtrée pour chacune des deux fenêtres ($W_{-1}$, $W_1$) additionnelles à partir dudit nombre de valeurs de centre de gravité relatives calculées.

**7.** Procédé selon la revendication 6, **caractérisé en ce que** le procédé comporte de plus l'exécution de façon répétitive des étapes :

* de remise à l'état initial desdites valeurs de centre de gravité relatives filtrées ;
* de calcul un nombre de fois desdites valeurs de centre de gravité relatives pour les deux fenêtres ($W_{-1}$, $W_1$) additionnelles; et de mise à jour desdites valeurs de centre de gravité relatives filtrées pour chaque paire de nouvelles valeurs de centre de gravité relatives en incluant la paire de nouvelles valeurs de centre de gravité relatives ; et
* de calcul dudit centre de gravité combiné en combinant le centre de gravité pour ladite fenêtre ($W_0$) de recherche précédente avec au moins l'une desdites valeurs de centre de gravité relatives filtrées mises à jour.

**8.** Récepteur disposant d'un moyen (11, 12, 13) pour détecter des composantes de chemins multiples dans un canal (3, 4, 6) de radio sujet à des évanouissements variables dans le temps dans un système de communications numériques sans fil dans lequel des composantes de chemins multiples individuelles d'un signal émis par l'intermédiaire dudit canal sont reçues avec des retards ($\tau_a$, $\tau_b$, $\tau_c$) individuels à l'intérieur d'une plage de valeurs de retard possibles, le récepteur étant conçu pour :

* calculer de façon répétitive un profil de retard indiquant une magnitude (Y) pour chacune d'un nombre de valeurs de retard individuelles ;
* rechercher de façon répétitive de nouvelles composantes de chemins multiples dans une fenêtre ($W_0$) de recherche constituant un sous-ensemble de ladite plage de valeurs de retard possibles ; et
* positionner ladite fenêtre ($W_0$) de recherche sur la base de façon au moins intermittente d'au moins un profil de retard calculé précédemment pour une plage ($W_{ext}$ ; $W_0$, $W_{-1}$, $W_1$) de valeurs de retard qui est plus large que la fenêtre ($W_0$) de recherche dans laquelle le récepteur est conçu pour rechercher de nouvelles composantes de chemins multiples,

le récepteur étant de plus conçu pour produire ladite plage ($W_{ext}$ ; $W_0$, $W_{-1}$, $W_1$) plus large de valeurs de retard en combinant une fenêtre ($W_0$) de recherche précédente avec deux fenêtres ($W_{-1}$, $W_1$) additionnelles ayant la même taille que la fenêtre de recherche ($W_0$) précédente et étant agencées de façon contiguë l'une à l'autre symétriquement autour du centre de la fenêtre ($W_0$) de recherche précédente,
**caractérisé en ce que** le récepteur est de plus conçu pour :

* calculer un centre de gravité pour chacune de ladite fenêtre ($W_0$) de recherche précédente et desdites deux fenêtres ($W_{-1}$, $W_1$) additionnelles ;
* calculer un centre de gravité combiné en combinant le centre de gravité pour ladite fenêtre ($W_0$) de recherche précédente avec le centre de gravité pour au moins l'une desdites deux fenêtres ($W_1$, $W_1$) additionnelles ; et
* positionner la fenêtre ($W_0$) de recherche autour dudit centre de gravité combiné.

9. Récepteur selon la revendication 8, **caractérisé en ce que** le récepteur est de plus conçu pour alterner entre

* une recherche un nombre de fois d'une fenêtre ($W_0$) de recherche précédente dans une fenêtre de recherche positionnée sur la base d'un profil de retard calculé ; et
* une recherche un nombre de fois d'une plage ($W_{ext}$ ; $W_0$, $W_{-1}$, $W_1$) de valeurs de retard plus large que ladite fenêtre de recherche dans une fenêtre de recherche positionnée sur la base d'un profil de retard calculé.

10. Récepteur selon la revendication 8 ou 9, **caractérisé en ce que** le récepteur est de plus conçu pour

* calculer un nombre de fois un profil de retard pour la plage ($W_{ext}$ ; $W_0$, $W_{-1}$, $W_1$) plus large de valeurs de retard
* calculer un profil de retard filtré à partir dudit nombre de profils de retard calculés ; et
* utiliser ledit profil de retard filtré comme le profil de retard calculé pour la plage plus large de valeurs de retard.

11. Récepteur selon la revendication 8, **caractérisé en ce que** le récepteur est de plus conçu pour positionner la fenêtre ($W_0$) de recherche en ayant comme centre ledit centre de gravité calculé.

12. Récepteur selon la revendication 8, **caractérisé en ce que** le récepteur est de plus conçu pour calculer une valeur de centre de gravité relative pour chacune desdites deux fenêtres ($W_{-1}$, $W_1$) additionnelles en soustrayant le centre de gravité pour ladite fenêtre ($W_0$) de recherche précédente du centre de gravité calculé pour chacune desdites deux fenêtres ($W_{-1}$, $W_1$) additionnelles.

13. Récepteur selon la revendication 12, **caractérisé en ce que** le récepteur est de plus conçu pour :

* calculer un nombre de fois lesdites valeurs de centre de gravité relatives pour les deux fenêtres ($W_{-1}$, $W_1$) additionnelles ; et
* calculer une valeur de centre de gravité relative filtrée pour chacune des deux fenêtres ($W_{-1}$, $W_1$) additionnelles à partir dudit nombre de valeurs de centre de gravité relatives calculées.

14. Récepteur selon la revendication 13, **caractérisé en ce que** le récepteur est de plus conçu pour :

* remettre à l'état initial lesdites valeurs de centre de gravité relatives filtrées ;
* calculer un nombre de fois lesdites valeurs de centre de gravité relatives pour les deux fenêtres ($W_{-1}$, $W_1$) additionnelles ; et mettre à jour lesdites valeurs de centre de gravité relatives filtrées pour chaque paire de nouvelles valeurs de centre de gravité relatives en incluant la paire de nouvelles valeurs de centre de gravité relatives ; et
* calculer ledit centre de gravité combiné en combinant le centre de gravité pour ladite fenêtre ($W_0$) de recherche précédente avec au moins l'une desdites valeurs de centre de gravité relatives filtrées mises à jour.

15. Récepteur selon l'une quelconque des revendications 8 à 14, **caractérisé en ce que** le récepteur est conçu pour être utilisé dans un système à Accès Multiple par Répartition en Code Large Bande.

16. Programme informatique comportant un moyen de code de programme pour exécuter les étapes de l'une quelconque des revendications 1 à 7 lorsque l'on fait fonctionner ledit programme informatique sur un ordinateur.

17. Programme informatique selon la revendication 16, **caractérisé en ce que** le programme informatique est stocké sur un support pouvant être lu par un ordinateur.

EP 1 487 127 B1

Fig. 1

Fig. 2

Received signal

Path Searcher

Delay Estimator

RAKE Receiver

11

12

13

## Fig. 3

$Y$
(power)

$Y_a$

$Y_b$

$Y_c$

$\tau_1$    $\tau_d$    $\tau_a$    $\tau_b$    $\tau_c$    $\tau_D$    $\tau$
(delay)

delay range

## Fig. 4

Spread pilots

Despread pilots for
a given number of
delays
— 101

— 100

Multiply by the conjugate
of the pilot symbols
for each delay
— 102

For each delay
sum $N_c$ derotated
pilot symbols
— 103

For each delay
square the sums
— 104

$X_d$

For each delay
sum $N_{nc}$ of the
squared sums $X_d$
— 105

$Y_d$

## Fig. 5

$Y$
(power)

$Y_a$
$Y_b$

search window

$\tau$
(delay)

$Y$
(power)

$Y_c$
$Y_d$

$Y_a$

search window

$\tau$
(delay)

alt. search window

## Fig. 6

$N_{ext} = 5$

n=1    $W_0$

n=2    $W_0$

n=3    $W_0$

n=4    $W_0$

n=5    $W_{ext}$

n=6    $W_0$

n=7    $W_0$

n=8    $W_0$

n=9    $W_0$

n=10    $W_{ext}$

n=11    $W_0$

n=12    $W_0$

t

Fig. 7

Fig. 8

Fig. 9

Spread
pilots

Path searcher
hardware block — 301

Compute new $Y_d$,
RSCP and COG values
using $W_0$ — 302

Filter computed
RSCP and COG values — 303

Time for
ext. window
? — 304

no

Adjust
window position — 305

300

yes

Compute values
for extended
window — 306

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1126627 A
- EP 1257067 A
- US 20010046221 A
- US 6370397 B
- EP 1276248 A